# EUROPÄISCHE PATENTSCHRIFT

(11) **EP 2 612 423 B1**
(45) Veröffentlichungstag und Bekanntmachung des Hinweises auf die Patenterteilung: **15.04.2015**
(21) Anmeldenummer: 12703958.4
(22) Anmeldetag: 25.01.2012
(51) Int. Cl.: H02K 5/128, H02K 15/16, F04D 13/06

(54) **VERFAHREN ZUM MONTIEREN EINES SPALTTOPFES EINER MOTORPUMPE**
METHOD FOR MOUNTING AN AIR-GAP SLEEVE OF A MOTOR PUMP
PROCÉDÉ DE MONTAGE D'UNE CHEMISE D'ENTREFER D'UNE POMPE À MOTEUR

(30) Priorität: 16.03.2011 DE 102011014088
(43) Veröffentlichungstag der Anmeldung: 10.07.2013
(73) Patentinhaber: WILO SE, 44263 Dortmund (DE)
(72) Erfinder: MATERNE, Thomas, 59348 Lüdinghausen (DE); STRELOW, Günter, 44801 Bochum (DE)
(74) Vertreter: Cohausz, Helge B.
(86) Internationale Anmeldenummer: PCT/EP2012/000315
(87) Internationale Veröffentlichungsnummer: WO 2012/123049

(56) Entgegenhaltungen:
- EP-A2- 2 182 218
- DE-A1- 4 209 579

## Beschreibung

Die Erfindung betrifft ein Verfahren zum koaxialen Montieren eines Kunststoff-Spalttopfes in der Ausnehmung des Stators eines eine Pumpe antreibenden Elektromotors, wobei zwischen der Außenseite des Spalttopfes und der Innenfläche der Statorausnehmung ein koaxialer Ringraum als Abstand besteht.

Beim Einsetzen von Spalttöpfen aus Kunststoff in die Ausnehmung eines Stators hat es sich gezeigt, dass es leicht zu stärkeren Verformungen des Kunststoffmaterials des Stators kommen kann, wenn ein ausreichend sicherer Sitz des Spalttopfes im Stator erreicht werden soll. Soll ein sicherer Presssitz im Stator erzielt werden, so kommt es zu Verformungen, die das Kunststoffmaterial des Spalttopfes belastet. Soll dagegen ein Material schonender Sitz erreicht werden, so ist oft ein nicht genügender Halt gegeben.

Die europäische Patentanmeldung EP 2 182 218 A2 offenbart eine Kreiselpumpe mit einem einen Elektromotor aufnehmenden, einen Spalttopf umfassende und aus Kunststoffmaterial bestehenden Zwischengehäuseteil. Der Spalttopf weist an seiner Außenseite drei achsparallele vorstehende Rippen auf, deren Höhe geringer ist als die radiale Breite des Raumes zwischen dem Spaltrohr und dem Stator, der hier als Klauenpolstator ausgeführt ist. Die achsparallelen Rippen zwischen dem Spalttopf und den Klauenpolstator bilden die Voraussetzung für eine stabile und sichere spielfreie Verbindung zwischen Klauenpolstator und dem Spalttopf. Die Rippen sind in ungleichmäßigen Winkelabständen untereinander angeordnet, um einen resonanzarmen Aufbau zu erreichen, d.h. Resonanzen zu reduzieren, die im Betrieb der Kreiselpumpe entstehen können.

Des Weiteren offenbart die deutsche Patentanmeldung DE 42 09 579 A1 eine Lagerbuchse, die in einer Ausnehmung eines Lagerschildes eingepresst wird. Die Lagerbuchse weist an ihrer Mantelfläche eine Vielzahl radial vorstehender Erhebungen auf, die an der Innenwand der Ausnehmung unter Vorspannung in Anlage sind. Durch Abscherung an einer Kante der Mündungsöffnung der Ausnehmung werden die Erhebungen beim Einpressen der Lagerbuchse der tatsächlichen Form der Ausnehmung angepasst. Hierdurch ist die Verwendung eines relativ harten Werkstoffs der Lagerbuchse möglich.

Aufgabe der Erfindung ist es, einen sicheren Halt des Spalttopfes in der Ausnehmung eines Stators zu erreichen, ohne hohe Belastungen des Spaltmaterials.

Diese Aufgabe wird erfindungsgemäß dadurch gelöst, dass der Spalttopf an seiner Außenseite mit mehreren achsparallelen vorstehenden Rippen aus Kunststoff versehen wird, deren Höhe größer ist als die radiale Breite des Ringraumes, und dass beim koaxialen Einschieben des Spalttopfes in die Statorausnehmung eine vordere scharfe Kante der Statorausnehmung die Rippen in ihrer Höhe durch Abscheren so weit verringert, dass der Spalttopf im Presssitz in der Statorausnehmung einliegt.

Durch solche, in ihrer Höhe exakt an die Statorausnehmung angepasste Rippen wird der Spalttopf im Presssitz bzw. Klemmsitz in der Statorausnehmung sicher gehalten, ohne eine höhere Belastung des Spalttopfmaterials. Damit entstehen auch keine größeren Spannungen im Spalttopfmaterial nach dessen Einsetzen. Es wird somit sowohl ein Formschluss als auch ein Reibschluss zwischen dem Spalttopf und dem Stator erreicht.

Vorzugsweise wird vorgeschlagen, dass zumindest einige der Rippen nur über einen Teil der Spalttopflänge verlaufen, so dass dafür gesorgt ist, dass zumindest im Bereich, in dem die größeren radialen Kräfte auftreten, ein sicherer Sitz gegeben ist. Jeweils auch von Vorteil ist, wenn einige der Rippen nur über einen Teil der Spalttopflänge eine größere Höhe als die radiale Abstandsbreite des Ringraumes aufweisen.

Von Vorteil ist hierbei, wenn die zentrierenden Rippen größerer Höhe oder der Rippenbereich größerer Höhe im vorderen, dem Lagerschild nahen Bereich des Spalttopfes angeordnet ist/sind. Vorzugsweise wird vorgeschlagen, wenn die Höhe der Rippen 0,5 bis 2 % des Außendurchmessers des Spaltrohres beträgt. Hierbei wird bevorzugt, wenn die Höhe der Rippen 1 % des Außendurchmessers des Spaltrohres beträgt.

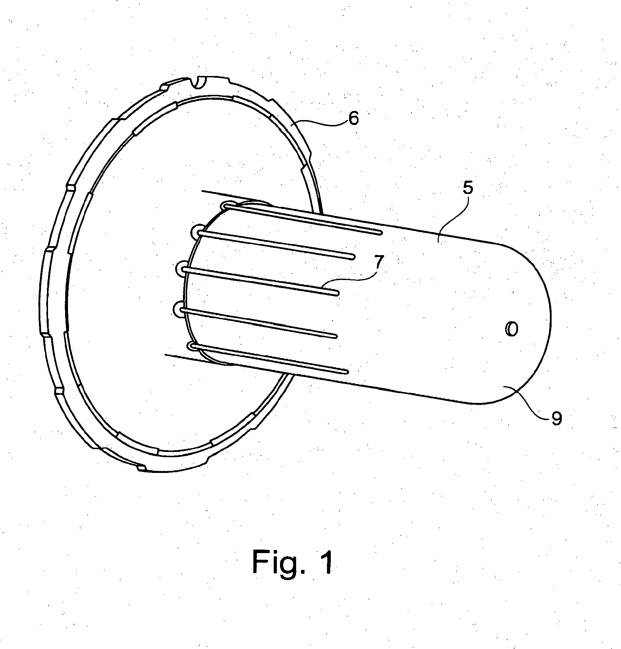

Ein Ausführungsbeispiel der Erfindung ist in den Zeichnungen dargestellt und wird im Folgenden näher beschrieben. Es zeigen
- Figur 1: den an einem Lagerschild angeformten Spalttopf in perspektivischer Darstellung und

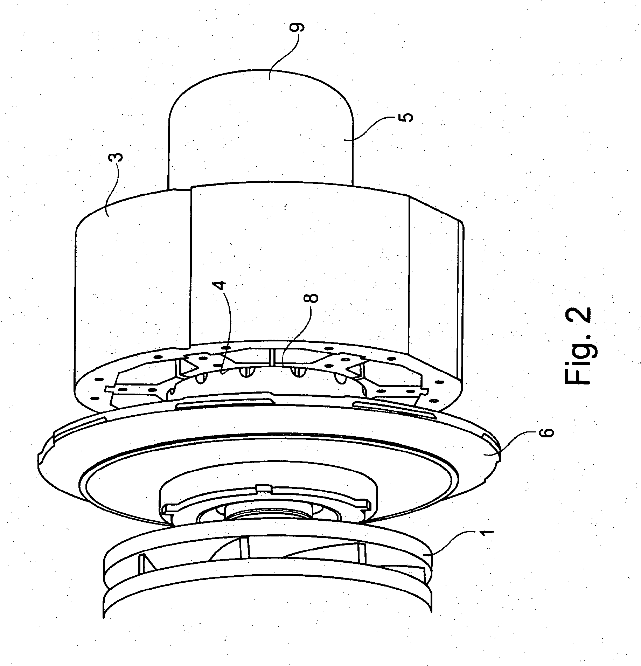

- Figur 2: eine perspektivische Ansicht vom Stator mit eingestecktem Spaltrohr.

Eine Nassläufer-Motorpumpe weist ein Pumpengehäuse mit Pumpenlaufrad 1 und ein am Pumpengehäuse befestigtes Elektromotorengehäuse auf. Im Motorengehäuse befindet sich der Motorenstator 3 mit der Ausnehmung 4, in der der Spafttopf 5 koaxial einlegt. Am vorderen Ende des aus Kunststoff bestehenden Spalttopfes 5 ist das aus Kunststoff bestehende Lagerschild 6 angeformt, das den Pumpenraum vom Motorenraum trennt.

An der Außenseite des Spalttopfes 5 sind mehrere achsparallele Rippen 7 aus Kunststoff angeformt, wobei Rippen, Spalttopf und Lagerschild aus demselben Kunststoff bestehen. Zwischen der Außenseite des Spalttopfes 5 und der Innenwand der Statorausnehmung 4 befindet sich ein koaxialer schmaler Ringraum, in dem die Rippen 7 einliegen, die an der Außenwand des Spalttopfes 5 achsparallel angeformt sind.

Die Anzahl der Rippen 7 beträgt fünf bis fünfzehn, wobei die Rippen zueinander jeweils den gleichen Abstand hauben. Im noch nicht eingesetzten Zustand des Spalttopfes 5 weisen die Rippen zumindest über einen Bereich ihrer Länge eine größere Höhe auf als die Radialbreite des Ringraumes.

Wird der Spalttopf 5 koaxial in die Statorausnehmung 4 eingeschoben, so stoßen die Rippen 7 gegen eine vordere scharfe Kante 8 der Ausnehmung 4, wodurch die scharfe Kante spanend den überstehenden Bereich der Rippen 7 abhebt, so dass das Einpressen des Spalttopfes 5 in die Statorausnehmung 4 zu einer Bearbeitung der Rippen führt. Hierdurch erhalten die Rippen 7 exakt die Höhe, die der radialen Breite des Ringraumes entspricht, so dass ein klemmender Formschluss zwischen den Rippen und der Innenseite der Statorausnehmung 4 erreicht wird.

Im gezeichneten Ausführungsbeispiel sind die Rippen 7 nicht über die gesamte Länge des Spalttopfmantels geführt, sondern befinden sich nur etwa in der vorderen Hälfte. Stattdessen können die Rippen aber auch über die gesamte Länge des Spalttopfmantels oder sogar über die gesamte Länge des Spalttopfes und damit zumindest teilweise über das hintere Ende 9 des Spalttopfes 5 geführt werden.

In einer weiteren Alternative besitzen die Rippen 7 nicht über ihre gesamte Länge die abzuscherende größere Höhe, sondern nur über einen Teil ihrer Länge oder über zwei oder drei Teilbereiche ihrer Länge. Hierbei können die zentrierenden Rippen größerer Höhe oder der Rippenbereich größerer Höhe im vorderen, dem Lagerschild nahen Bereich des Spalttopfes angeordnet sein.

Die Höhe der Rippen 7 beträgt im noch nicht abgescherten Zustand ca. 0,5 bis 2 % des Außendurchmessers des Spaltrohres, vorzugsweise 1 % des Außendurchmessers des Spaltrohres.

In diesem Patent wird unter einen "Spalttopf" auch ein "Spaltrohr" verstanden, dessen Boden nicht am Rohr angeformt ist.

## Patentansprüche

1. Verfahren zum koaxialen Montieren eines Kunststoff-Spalttopfes (5) in der Ausnehmung (4) des Stators (3) eines eine Pumpe antreibenden Elektromotors, wobei zwischen der Außenseite des Spalttopfes und der Innenfläche der Statorausnehmung (4) ein koaxialer Ringraum als Abstand besteht, **dadurch gekennzeichnet, dass** der Spalttopf (5) an seiner Außenseite mit mehreren achsparallelen vorstehenden Rippen (7) aus Kunststoff versehen wird, deren Höhe größer ist als die radiale Breite des Ringraumes, und dass beim koaxialen Einschieben des Spalttopfes (5) in die Statorausnehmung (4) eine vordere scharfe Kante (8) der Statorausnehmung die Rippen in ihrer Höhe durch Abscheren so weit verringert, dass der Spalttopf im Presssitz in der Statorausnehmung einliegt.

2. Verfahren nach Anspruch 1, **dadurch gekennzeichnet, dass** zumindest einige der Rippen (7) nur über einen Teil der Spalttopflänge verlaufen.

3. Verfahren nach Anspruch 1 oder 2, **dadurch gekennzeichnet, dass** einige der Rippen (7) nur über einen Teil der Spalttopflänge eine größere Höhe als die radiale Abstandsbreite des Ringraumes aufweisen.

4. Verfahren nach einem der vorherigen Ansprüche, **dadurch gekennzeichnet, dass** die zentrierenden Rippen größerer Höhe oder der Rippenbereich größerer Höhe im vorderen, dem Lagerschild (6) nahen Bereich des Spalttopfes (5) angeordnet ist/sind.

5. Verfahren nach einem der vorherigen Ansprüche, **dadurch gekennzeichnet, dass** die Höhe der Rippen (7) 0,5 bis 2 % des Außendurchmessers des Spalttopfes (5) beträgt.

6. Verfahren nach Anspruch **5, dadurch gekennzeichnet, dass** die Höhe der Rippen (7) 1 % des Außendurchmessers des Spafttopfes (5) beträgt.

## Claims

1. Method for the coaxial mounting of a plastic air-gap sleeve (5) in the recess (4) of the stator (3) of an electric motor driving a pump, a coaxial annular space being present as clearance between the outside of the air-gap sleeve and the inner face of the stator recess (4), **characterized in that** the air-gap sleeve (5) is provided on its outside with a plurality of axially parallel projecting ribs (7) made from plastic, the height of which is greater than the radial width of the annular space, and **in that**, when the air-gap sleeve (5) is pushed coaxially into the stator recess (4), a front sharp edge (8) of the stator recess reduces the height of the ribs by shearing-off to an extent such that the air-gap sleeve is seated with a press fit in the stator recess.

2. Method according to Claim 1, **characterized in that** at least some of the ribs (7) run over only part of the air-gap sleeve length.

3. Method according to Claim 1 or 2, **characterized in that** some of the ribs (7) have a greater height than the radial clearance width of the annular space over only part of the air-gap sleeve length.

4. Method according to one of the preceding claims, **characterized in that** the centring ribs of greater height or the rib region of greater height are/is arranged in the front region, near the bearing plate (6), of the air-gap sleeve (5).

5. Method according to one of the preceding claims, **characterized in that** the height of the ribs (7) amounts to 0.5 to 2% of the outside diameter of the air-gap sleeve (5).

6. Method according to Claim 5, **characterized in that** the height of the ribs (7) amounts to 1% of the outside diameter of the air-gap sleeve (5).

## Revendications

1. Procédé pour le montage coaxial d'une chemise d'entrefer en plastique (5) dans l'évidement (4) du stator (3) d'un moteur électrique entraînant une pompe, un espace annulaire coaxial existant en tant qu'espacement entre le côté extérieur de la chemise d'entrefer et la surface intérieure de l'évidement statorique (4), **caractérisé en ce que** la chemise d'entrefer (5) est pourvue, au niveau de son côté extérieur, de plusieurs ailettes (7) en plastique faisant saillie avec leurs axes parallèles, dont la hauteur est supérieure à la largeur radiale de l'espace annulaire, et **en ce que** lors de l'insertion coaxiale de la chemise d'entrefer (5) dans l'évidement statorique (4), une arête avant acérée (8) de l'évidement statorique réduit les ailettes en hauteur par cisaillement à un degré tel que la chemise d'entrefer s'insère dans l'évidement statorique avec ajustement serré.

2. Procédé selon la revendication 1, **caractérisé en ce qu'**au moins certaines des ailettes (7) s'étendent seulement sur une partie de la longueur de la chemise d'entrefer.

3. Procédé selon la revendication 1 ou 2, **caractérisé en ce que** certaines des ailettes (7) présentent seulement sur une partie de la longueur de la chemise d'entrefer une plus grande hauteur que la largeur d'espacement radiale de l'espace annulaire.

4. Procédé selon l'une quelconque des revendications précédentes, **caractérisé en ce que** les ailettes de centrage de plus grande hauteur ou la région des ailettes de plus grande hauteur est/sont disposée(s) dans la région avant de la chemise d'entrefer (5) proche du flasque de palier (6).

5. Procédé selon l'une quelconque des revendications précédentes, **caractérisé en ce que** la hauteur des ailettes (7) vaut 0,5 à 2 % du diamètre extérieur de la chemise d'entrefer (5).

6. Procédé selon la revendication 5, **caractérisé en ce que** la hauteur des ailettes (7) vaut 1 % du diamètre extérieur de la chemise d'entrefer (5).
